# FASCICULE DE BREVET EUROPEEN

(11) **EP 2 523 814 B1**
(45) Date de publication et mention de la délivrance du brevet: **11.12.2013**
(21) Numéro de dépôt: 11701001.7
(22) Date de dépôt: 14.01.2011
(51) Int. Cl.: B60C 23/04

(54) **PROCEDE D'ECHANGE DE SIGNAUX ENTRE UN CAPTEUR DE PRESSION DE PNEU ET UNE UNITE CENTRALE EQUIPANT UN VEHICULE AUTOMOBILE**
VERFAHREN ZUM AUSTAUSCH VON SIGNALEN ZWISCHEN EINEM REIFENDRUCKSENSOR UND EINER ZENTRALPROZESSOREINHEIT IN EINEM MOTORFAHRZEUG
METHOD FOR EXCHANGING SIGNALS BETWEEN A TIRE PRESSURE SENSOR AND A CENTRAL PROCESSING UNIT IN A MOTOR VEHICLE

(30) Priorité: 15.01.2010 FR 1050252
(43) Date de publication de la demande: 21.11.2012
(73) Titulaire: Johnson Controls Technology Company, Holland, MI 49423 (US)
(72) Inventeur: ABI CHAAYA, Elie, F-95280 Jouy le Moutier (FR); REIMON, Julien, F-93600 Aulnay sous Bois (FR)
(74) Mandataire: Lavialle, Bruno François Stéphane
(86) Numéro de dépôt international: PCT/EP2011/000136
(87) Numéro de publication internationale: WO 2011/085991

(56) Documents cités:
- EP-A1- 1 524 133
- US-A1- 2003 110 851
- US-B1- 6 275 148

## Description

L'invention concerne un procédé d'échange de données entre un capteur de pression et/ou de température monté dans une roue de véhicule automobile et une unité centrale équipant ce véhicule.

### ARRIERE PLAN DE L'INVENTION

Un système de surveillance de la pression des pneus d'un véhicule automobile comprend un capteur de pression et/ou de température monté dans chaque roue du véhicule, et une unité centrale qui collecte les données issues de chaque capteur au moyen de liaisons sans fil. Un tel système permet notamment d'informer le conducteur du véhicule du fait que la pression d'un pneu est anormalement faible. Un procédé tel que décrit par le préambule de la revendication 1 est connu de US 2003/0110851 A1.

Concrètement, chaque capteur comprend une sonde de pression et/ou de température, ainsi qu'un émetteur de signaux radioélectriques, et une pile d'alimentation. Des données de pression et de température sont ainsi émises par chaque capteur et collectées par cette unité centrale.

A cet effet, chaque capteur comprend des moyens pour déterminer si la roue dans laquelle il est monté tourne ou non. Ces moyens peuvent comprendre un accéléromètre électronique, de type composant MEMS, qui évalue régulièrement la direction de la gravité par rapport à un repère qui lui est propre, ce qui permet de déterminer que la roue tourne lorsque la direction de la gravité varie par rapport au repère du capteur, et qu'elle ne tourne pas si cette direction est constante.

Ainsi, d'une manière générale, chaque capteur émet des données de pression et/ou de température lorsque la roue dans laquelle il est montée tourne, et il n'effectue pas d'émission lorsqu'il évalue que la roue est immobile. Ceci permet de limiter significativement la consommation électrique du capteur sur l'ensemble de sa vie.

Lorsqu'un capteur émet des signaux, ceux-ci comprennent d'une part des signaux de transmission des données numériques telles que la pression et la température mesurées, et d'autre part un signal dit de localisation qui est exploité par l'unité centrale pour identifier la roue dans laquelle est monté le capteur ayant émis ces données numériques. Le signal de localisation est par exemple constitué par une série d'impulsions émises à intervalles réguliers prédéterminés.

Concrètement, l'unité centrale identifie les roues à partir de leurs vitesses de rotation qui diffèrent sensiblement d'une roue à l'autre, de manière faible mais réelle. Ces différences de vitesse sont dues notamment à la différence d'état de surface de la route entre une roue gauche et une roue droite, à un défaut de parallélisme des roues, et à d'autres paramètres de ce type qui donnent inévitablement lieu à des différences de vitesses de rotation des roues.

En pratique, l'unité centrale établit à partir du signal de localisation une estimation précise de la vitesse de rotation de la roue portant le capteur ayant généré ce signal. Cette estimation est ensuite comparée à des mesures de vitesses de chaque roue qui sont établies et actualisées parallèlement, par un système indépendant tel qu'un système d'antiblocage dont le véhicule est équipé.

Finalement, l'unité centrale détermine que la roue dont est issu le signal de localisation est celle dont la vitesse mesurée par le système indépendant est la plus proche de la vitesse estimée précisément à partir du signal de localisation.

L'estimation précise de la vitesse de la roue à partir du signal de localisation est assurée par exemple comme décrit dans la demande de brevet FR2833523, c'est-à-dire avec un algorithme qui identifie une périodicité de la courbe enveloppe du signal de localisation reçu par l'unité centrale : la période de cette courbe enveloppe correspond à la fréquence de rotation de la roue.

Une autre solution d'estimation précise de la vitesse de la roue à partir du signal de localication, basée sur une analyse du déphasage de ce signal, est donnée dans la demande de brevet FR2844748.

En pratique, il apparaît que les capteurs doivent émettre des signaux ayant une puissance relativement importante pour assurer une transmission d'informations suffisamment fiable, ce qui limite significativement la durée de vie des batteries équipant ces capteurs.

L'une des solutions permettant d'accroître la durée de vie des capteurs consiste à ajoute une antenne additionnelle reliée à l'unité centrale en la positionnant de manière à améliorer les conditions de transmission sans fil. Ceci permet de réduire la puissance d'émission des signaux générés par les capteurs, et par là même d'accroître la durée de vie des batteries ou piles de ces capteurs.

En contrepartie, l'ajout d'une antenne additionnelle induit un surcoût matériel et un surcoût d'intégration qui constituent en soi un frein à la mise en oeuvre d'un système de contrôle de pression.

### OBJET DE L'INVENTION

Le but de l'invention est de proposer une solution permettant d'accroître la durée de vie des batteries équipant les capteurs.

### RESUME DE L'INVENTION

A cet effet, l'invention a pour objet un procédé de transmission sans fil d'informations par signaux radioélecriques entre un capteur de pression équipant une roue de véhicule automobile et une unité centrale équipant ce véhicule, dans lequel le capteur émet à l'attention de l'unité centrale, d'une part des signaux représentatifs de données numériques à transférer vers l'unité centrale, et d'autre part un signal de localisation exploité par l'unité centrale pour identifier la roue du véhicule dont les données numériques sont issues, caractérisé en ce que la puissance d'émission du signal de localisation est inférieure à la puissance d'émission des signaux de transmission de données.

Avec cette solution, l'énergie utilisée pour l'émission des signaux est réduite sans nuire à la qualité de l'échange des données : la puissance d'émission étant maintenue pour les signaux d'échange de données, ces données restent transmises au moyen d'une liaison ayant une qualité optimale.

L'invention concerne également un procédé tel que défini ci-dessus, dans lequel le signal de localisation a une amplitude qui est inférieure à l'amplitude des signaux de transmission de donnes.

L'invention concerne également un procédé tel que défini ci-dessus, dans lequel le signal de localisation est constitué d'impulsions qui ont des durées inférieures aux impulsions formant les signaux de transmission de données.

L'invention concerne également un procédé tel que défini ci-dessus, dans lequel la durée du signal de localisation est ajustée sur la base d'une évaluation de la vitesse de rotation de la roue qui est mise en oeuvre au niveau du capteur.

L'invention concerne également un procédé tel que défini ci-dessus, dans lequel l'évaluation de la vitesse de rotation de la roue est assurée par détermination d'une périodicité de données issues d'un accéléromètre intégré au capteur.

### BREVE DESCRIPTION DES FIGURES

La figure 1 est une représentation schématique du contenu d'un signal de données numériques transférées entre le capteur et l'unité centrale ;
La figure 2 est une représentation schématique du contenu d'un signal d'identification qui inclut un signal de données numériques suivi d'un signal de localisation transférés entre le capteur et l'unité centrale ;
La figure 3 est un graphe donnant l'évolution en fonction du temps l'amplitude des signaux émis par le capteur pour l'ensemble d'une transmission incluant la transmission de données numériques telles que la pression suivie de la transmission d'autres données numériques telles qu'un numéro d'identification du capteur et suivie de l'émission d'un signal de localisation ;
La figure 4 est une représentation schématique de la durée du signal de localisation lorsque le véhicule a une faible vitesse ;
La figure 5 est une représentation schématique de la durée du signal de localisation lorsque le véhicule a une vitesse importante.

### DESCRIPTION DETAILLEE DE L'INVENTION

L'idée à la base de l'invention est de décorréler les caractéristiques des signaux de transmission de données des caractéristiques des signaux de localisation. Cette solution permet de réduire la puissance des signaux de localisation ce qui n'est pas pénalisant pour l'estimation de la vitesse d'une roue, et de maintenir une puissance d'émission plus élevée pour les signaux de transmission de données de façon à assurer une fiabilité satisfaisante pour la transmission de données.

L'énergie consommée par les capteurs en phase d'émission de signaux est ainsi obtenue en réduisant seulement la puissance d'émission des signaux de localisation et/ou en ajustant la durée des signaux de localisation en fonction de la vitesse effective du véhicule lors de la transmission.

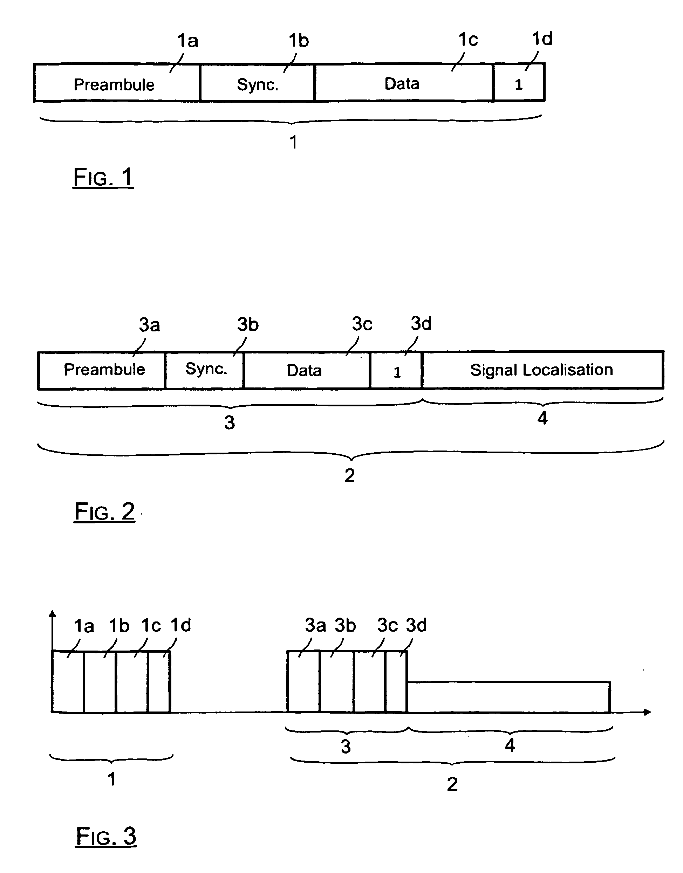

Un signal de transmission de données, représenté schématiquement dans la figure 1 en y étant repéré par 1, comprend une succession de mots binaires incluant ici un préambule 1a, un mot de synchronisation 1b, un mot représentatif des données transférées 1c, ainsi qu'un bit terminal repéré par 1d.

Dans l'exemple des figures, le préambule a une longueur comprise entre 24 et 904 bits, le mot de synchronisation est émis sur une durée de 0,624 millisecondes, et le mot de données a une longueur de 49 bits.

Un signal d'identification émis par un capteur, qui est représenté en figure 2 en y étant repéré par 2 comporte d'une part un signal de données repéré par 3, et d'autre part un signal de localisation repéré par 4. Le signal de données 3 a un contenu du même type ou format que le signal de données 1 : il comprend lui aussi un préambule 3a, un mot de synchronisation 3b, un mot représentatif des données numériques transférées 3c et un bit final repéré par 3d.

Le signal de données numériques 1 est par exemple utilisé pour transférer les données numériques représentatives de la température et de la pression mesurées par le capteur, alors que le signal de données numériques 3 est intégré au signal d'identification 2 pour transférer par exemple un numéro d'identificateur du capteur.

Comme expliqué dans le préambule de la présente demande, le signal de localisation 4 est exploité par l'unité centrale du véhicule pour identifier la roue qui porte le capteur émettant ce signal. Dans l'exemple des figures, l'émission du signal de localisation s'étend sur une durée de 294 millisecondes, et ce signal est par exemple constitué d'une série d'impulsions émises à intervalle régulier.

Ainsi, l'exploitation par l'unité centrale d'un signal d'identification 2 qu'elle reçoit permet à celle-ci d'une part de déterminer le numéro d'identificateur du capteur, et d'autre part d'identifier la roue (avant gauche, avant droite, arrière gauche, arrière droite) dans laquelle ce capteur est monté.

La durée de vie de la batterie ou pile intégrée au capteur est accrue en réduisant la puissance du signal de localisation 4 par rapport à la puissance des signaux de transfert de données numériques 1 ou 3, comme illustré à la figure 3.

En effet, il apparaît que la puissance du signal de localisation peut être diminuée sans réduction de la robustesse de l'estimation de la vitesse de rotation de la roue, du fait que cette estimation est réalisée de manière statistique par l'unité centrale. Autrement dit, si certains des bits ou impulsions du signal de localisation émis par le capteur ne sont pas reçus par l'unité centrale, cela n'a normalement pas d'incidence sur l'estimation de la vitesse de la roue par cette unité centrale.

La puissance des signaux de transmission de données 1 et 3 est quant à elle maintenue à un niveau nominal, dans la mesure où la transmission de données nécessite un plus haut niveau de qualité de transmission : la perte d'un bit ou d'une impulsion compromet l'intégrité de l'ensemble des données transmises.

Comme illustré par la figure 3, la réduction de la puissance du signal de localisation 4 se traduit par une réduction de l'énergie utilisée pour l'émission du signal de localisation, et donc de l'énergie nécessaire pour chaque transmission depuis le capteur vers l'unité centrale.

Plus particulièrement, comme illustré en figure 3, une transmission depuis le capteur vers l'unité centrale comprend dans un premier temps un signal de données 1 contenant les valeurs mesurées, telles que pression et température, dans un second temps le signal d'identification 2 comportant d'abord un signal de données comportant le numéro d'identification du capteur et dans un second temps un signal de localisation permettant à l'unité centrale de déterminer la roue à laquelle les mesures sont associées.

Dans l'exemple illustré en figure 3, la réduction de la puissance d'émission du signal de localisation 4 est assurée en limitant l'amplitude de chaque impulsion que comporte ce signal.

Il est également possible de réduire la puissance du signal de localisation 4 en diminuant la durée de chaque impulsion que comporte ce signal de localisation, complémentairement ou bien alternativement à la réduction de l'amplitude de ces impulsions.

La réduction de l'énergie nécessaire à l'émission du signal de localisation peut également être obtenue en ajustant la durée de l'émission de ce signal de localisation, en fonction de la vitesse du véhicule.

En effet, les algorithmes d'estimation de la vitesse d'une roue à partir du signal de localisation émis par son capteur recherchent une périodicité de l'enveloppe d'un tel signal ou de son déphasage, et la période en question correspond à la période de rotation de la roue.

En conséquence, il est nécessaire à un tel algorithme de disposer d'un signal de localisation sur une durée d'autant plus longue que la période en question est importante. En pratique, la durée d'émission du signal de localisation est constante dans les systèmes connus, et cette durée constante conditionne la vitesse minimale du véhicule en deçà de laquelle la vitesse de la roue ne peut pas être estimée avec suffisamment de précision.

L'ajustement de la durée d'émission du signal de localisation en fonction de la vitesse du véhicule, constitue une autre solution pour réduire globalement l'énergie utilisée par les capteurs pour générer les signaux. Selon l'invention, cette autre solution peut être mise en oeuvre en combinaison avec la réduction de la puissance du signal de localisation.

Selon cette solution, le capteur effectue, en exploitant l'accéléromètre électronique qu'il comporte, une évaluation grossière de la vitesse de rotation de la roue dans laquelle il est monté. Une durée de transmission du signal de localisation est ensuite calculée dans le capteur, à partir de l'évaluation grossière de la vitesse de rotation.

L'évaluation grossière de la vitesse de rotation est assurée au niveau du capteur, en analysant grossièrement l'évolution de la direction de la gravité par rapport au repère local de l'accéléromètre électronique, pendant un certain intervalle de temps pour y rechercher une périodicité approximative qui correspond alors à la période de rotation de la roue.

D'une manière plus générale, l'évaluation grossière de la vitesse de rotation de la roue est assurée au niveau du capteur en recherchant une périodicité dans les données délivrées par le composant accélérométrique qu'il comporte.

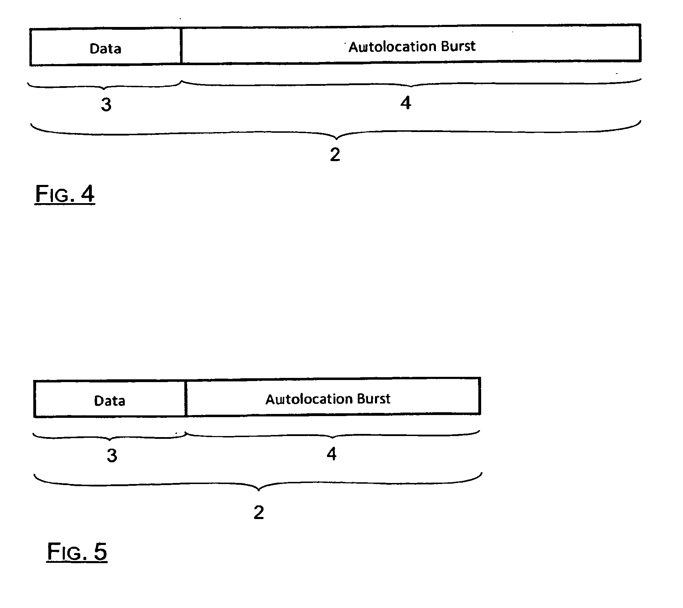

La durée de transmission du signal de localisation par le capteur qui est calculée au niveau du capteur est d'autant plus faible que la vitesse du véhicule est élevée. A titre d'exemple, la figure 4 montre un signal d'identification 2 correspondant à un cas où la vitesse du véhicule est basse, de sorte que le signal de localisation 4 a une durée importante. A contrario, la figure 5 montre un signal d'identification 2 correspondant au cas où la vitesse du véhicule est importante, de sorte que le signal de localisation a une durée beaucoup plus courte.

Le capteur émet ensuite, conformément à la figure 3, un signal de données 1 comportant la pression et/ou la température mesurée, puis un signal d'identification 2 comportant d'abord un signal de données 3 incluant un numéro identificateur du capteur, suivi d'un signal de localisation 4 émis pendant la durée qui a préalablement été calculée à partir de l'évaluation grossière de la vitesse.

Ainsi, grâce à cette solution, la durée du signal de localisation 4 est significativement réduite dès que le véhicule a une vitesse importante, ce qui diminue d'autant l'énergie consommée par les capteurs en phase d'émission.

De plus, cette solution permet d'accroître significativement la durée d'émission pour permettre une estimation de la vitesse de la roue à partir du signal de localisation reçu par l'unité centrale y compris lorsque la vitesse du véhicule est très faible, c'est-à-dire par exemple inférieure à 30 km/h.

Concrètement, cet ajustement de la durée d'émission en fonction de la vitesse effective du véhicule lors de la transmission autorise un fonctionnement normal du système de détection de pression y compris pour un véhicule circulant en ville, dans un embouteillage, c'est-à-dire à une faible vitesse.

D'une manière générale, il est à noter que dans l'exemple qui a été décrit, le capteur émet successivement un signal de données suivi d'un signal d'identification, mais ces deux transmissions ne sont pas nécessairement corrélées, et elles peuvent au contraire avoir lieu de manière complètement indépendante dans le temps. Ainsi, l'émission de signaux d'identification peut avoir lieu de manière beaucoup moins fréquente que l'émission des données de pression et de température.

## Revendications

1. Procédé de transmission sans fil d'informations par signaux radioélectriques entre un capteur de pression équipant une roue de véhicule automobile et une unité centrale équipant ce véhicule, dans lequel le capteur émet à l'attention de l'unité centrale, d'une part des signaux (1, 3) représentatifs de données numériques à transférer vers l'unité centrale, et d'autre part un signal de localisation (4) exploité par l'unité centrale pour identifier la roue du véhicule dont les données numériques sont issues, **caractérisé en ce que** la puissance d'émission du signal de localisation (4) est inférieure à la puissance d'émission des signaux de transmission de données (1, 3).

2. Procédé selon la revendication 1, dans lequel la durée du signal de localisation (4) est ajustée pour être d'autant plus faible que la vitesse du véhicule est élevée.

3. Procédé selon la revendication 1 ou 2, dans lequel le signal de localisation (4) a une amplitude qui est inférieure à l'amplitude des signaux de transmission de données (1, 3).

4. Procédé selon l'une des revendications 1 à 3, dans lequel le signal de localisation (4) est constitué d'impulsions qui ont des durées inférieures aux impulsions formant les signaux de transmission de données (1, 3).

5. Procédé selon l'une des revendications 2 à 4, dans lequel la durée du signal de localisation (4) est ajustée sur la base d'une évaluation de la vitesse de rotation de la roue qui est mise en oeuvre au niveau du capteur.

6. Procédé selon la revendication 5, dans lequel l'évaluation de la vitesse de rotation de la roue est assurée par détermination d'une périodicité de données issues d'un accéléromètre intégré au capteur.

## Patentansprüche

1. Verfahren zur drahtlosen Übertragung von Informationen durch radioelektrische Signale zwischen einem Drucksensor, mit dem der Reifen eines Kraftfahrzeugs ausgestattet ist, und einer Zentraleinheit, mit der dieses Fahrzeug ausgestattet ist, wobei der Sensor an die Zentraleinheit einerseits Signale (1, 3), die repräsentativ für die an die Zentraleinheit zu übertragenden digitalen Daten sind, und andererseits ein Ortungssignal (4) aussendet, das von der Zentraleinheit genutzt wird, um das Rad des Fahrzeugs zu identifizieren, dessen digitale Daten ausgegeben werden, **dadurch gekennzeichnet, dass** die Sendeleistung des Ortungssignals (4) niedriger ist als die Sendeleistung der Datenübertragungssignale (1, 3).

2. Verfahren nach Anspruch 1, bei dem die Dauer des Ortungssignals (4) eingestellt wird, um im gleichen Maße abgeschwächt zu werden, wie die Geschwindigkeit des Fahrzeugs erhöht wird.

3. Verfahren nach Anspruch 1 oder 2, bei dem das Ortungssignal (4) eine Amplitude hat, die kleiner als die Amplitude der Datenübertragungssignale (1, 3) ist.

4. Verfahren nach einem der Ansprüche 1 bis 3, bei dem das Ortungssignal (4) aus Impulsen besteht, deren Dauer kürzer ist als die der Impulse, die die Datenübertragungssignale (1, 3) bilden.

5. Verfahren nach einem der Ansprüche 2 bis 4, bei dem die Dauer des Ortungssignals (4) auf der Grundlage einer Auswertung der Drehzahl des Rads, das auf Höhe des Sensors betrieben wird, eingestellt wird.

6. Verfahren nach Anspruch 5, bei dem die Auswertung der Drehzahl des Rads durch Bestimmung einer Periodizität der durch den im Sensor integrierten Beschleunigungsmesser ausgegebenen Daten gesichert wird.

## Claims

1. A method of transmitting information in wireless manner by radio signals between a pressure sensor equipping a wheel of a motor vehicle and a central processor unit equipping said vehicle, in which method the sensor transmits, for the attention of the central processor unit, firstly signals (1, 3) representative of digital data to be transferred to the central processor unit, and secondly a location signal (4) used by the central processor unit to identify the vehicle wheel from which the digital data is coming, said method being **characterized in that** the emission power of the location signal (4) is lower than the emission power of the data transmission signals (1, 3).

2. A method according to claim 1, wherein the duration of the location signal (4) is adjusted in such a manner that the higher the speed of the vehicle the shorter the duration of the location signal.

3. A method according to claim 1 or 2, wherein the location signal (4) has an amplitude that is smaller than the amplitude of the data transmission signals (1, 3).

4. A method according to claim 1 or claim 3, wherein the location signal (4) is made up of pulses that have durations shorter than the durations of the pulses forming the data transmission signals (1, 3).

5. A method according to any one of claims 2 to 4, wherein the duration of the location signal (4) is adjusted on the basis of an evaluation of the speed of rotation of the wheel that is made at the sensor.

6. A method according to claim 5, wherein the evaluation of the speed of rotation of the wheel is made by determining a periodicity of data coming from an accelerometer integrated in the sensor.
